# EUROPEAN PATENT SPECIFICATION

(11) **EP 1 777 605 B1**
(45) Date of publication and mention of the grant of the patent: **29.04.2009**
(21) Application number: 06021984.7
(22) Date of filing: 19.10.2006
(51) Int. Cl.: G06F 1/16, H04N 5/64

(54) **Construction and method for assembling flat display panel**
Konstruktion und Zusammenbauverfahren von Flachbildschirmen
Construction et méthode d'assemblage d'un écran d' affichage plat

(30) Priority: 24.10.2005 JP 2005308490
(43) Date of publication of application: 25.04.2007
(73) Proprietor: Funai Electric Co., Ltd., Daito-shi, Osaka (JP)
(72) Inventor: Maruta, Naoto c/o Funai Electric Co., Ltd., Osaka (JP)
(74) Representative: Grünecker, Kinkeldey, Stockmair & Schwanhäusser Anwaltssozietät

(56) References cited:
- JP-A- 2000 148 039
- US-A1- 2004 252 254
- US-A1- 2005 212 982
- US-A1- 2006 133 017

## Description

The present invention relates to a flat panel display device according to the preamble of claim 1 and a method for fitting a cabinet, a flat display panel and a filter.

Such a flat panel display device is already known from JP 2000 148039 A. This document discloses a panel holder device, a flat display panel being mounted to the panel holder device, a filter holder device and a cabinet.

US 2005/212982 A1 discloses a display apparatus including a flat display panel, a chassis frame, attached to the back of the flat display panel and a front cabinet attached to the front of the flat display panel. Lugs of the chassis frame and lugs of the flat display panel are fixed together and are fixed to fittings attached to the back of the front cabinet with screws.

US 2004/252254 A1 describes a flat display apparatus including a flat display panel, a first receiving container, a driving part, a second receiving container and a ground member.

Televisions through which broadcasted images are displayed and brought into the limelight of the world have widely spread to the general household for a long time, as base media through which entertainment programs, movies, news and the like are brought into the limelight of the world. As the standard of living is raised, the screens of televisions have been large-sized. However, televisions employing cathode-ray tubes, which have been dominant for a long time, structurally have problems in depth, weight thereof and power used therein. Therefore, there are limits to the large-sizing of the televisions.

On the other hand, as electronics, semiconductor and material technologies progress, new display devices such as plasma displays and liquid crystal displays which are completely different from the cathode-ray tubes have been recently developed. Such display devices are thinner than the related cathode-ray tubes, so that the display devices are generically called "flat display panels".

Regarding the flat display panels for televisions, the techniques for the flat display panels develop, the flat display panels are now in quantity production, and can be produced at low cost and large-sized. In order to meet the need of buying new televisions which is arose as television broadcasts are digitalized and narrow housing environments in Japan, the related cathode-ray tube type display device has been replaced by the flat display panel and a flat display panel market has been widely expanded.

Incidentally, in a case where a television is manufactured by using the flat display panel, a general-purpose panel assembly which is supplied by a panel maker is fitted and original control treatment or the like may be applied to the panel assembly. The fitting of such a general-purpose panel assembly is generally carried out by combining the panel assembly, a filter and a resin-molded cabinet.

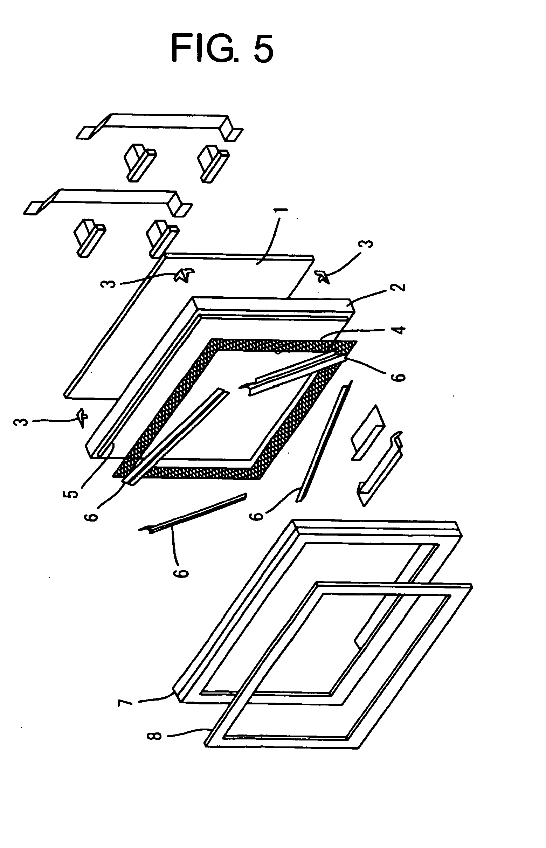

Referring now to Fig. 5, a related construction for fitting a plasma display panel to be used as a flat display panel will be discussed in order to facilitate understanding of the present invention. The plasma displaypanel 1 is mounted, through spacers 3 arranged at four corners of the plasma display panel, to a substantially frame-shaped panel holder 2 which is brought into a standing-up state, from the back side of the panel holder 2, and is screw-fastened to the panel holder 2 from the sides of the panel holder 2. Incidentally, the spacers 3 serve as means to keep the plasma display panel 1 spaced apart at a predetermined distance from a filter 4 which will be discussed hereinafter, and facing the filter 4.

The filter 4 is mounted, through a gasket 5, to the panel holder 2 from the front side of the panel holder 2. Upper, lower, left and right sides of the filter 4 are engaged with the panel holder 2 by four filter holders 6, which include rectilinear bodies each having a step portion of a crank-shape in cross-section, and are screw-fastened to the panel holder 2 from the front side. To the panel holder 2 to which the plasma display panel 1 and the filter 4 are mounted as discussed above, a substantially frame-shaped cabinet 7 and a bezel 8 for covering a clearance between the cabinet 7 and a periphery of a view area then are mounted from the front side and screw-fastened from the back side of the panel holder 2.

Accordingly, the above-mentioned fitting of the plasma display panel 1 is required to be carried out in the condition where the panel holder 2, the plasma display panel 1, the filter 4, the cabinet 7 and the bezel 8 all stand up. The fitting of the plasma display panel 1 is unable to be carried out in a full-scale production line in which the respective components are arranged on a line and the assembly-line production is efficiently performed. Therefore, separate work is forced to be performed in a sub-line step independent from the full-scale production line. In the above-mentionedfitting work in sub-line step, work efficiency is lowered, particularly, when the plasma display panel 1 is large-sized so as to have a size of 37 inch or more, and the number of stages of assembling is increased.

Moreover, fixing of the plasma display panel 1, the filter 4 and the cabinet 7 which are mounted to the panel holder 2 is required to be performed from several sides including the back side, the lateral sides and the front side, by using a large number of screws, so that work efficiency is lowered and the number of screws required to be used is increased. In addition, the spacers 3 for keeping a distance between the plasma display panel 1 and the filter 4 constant are required, thus increasing the cost of the television.

On the other hand, in order to easily fit the plasma display panel, the following related arts are proposed.

Japanese Patent Application Laid-Open No. 2002-40424 discloses that assemblies are arranged in a face-to-face relationship with each other at both ends of an interior of a mold frame having a storage space provided therein, and a reflector, a light guide plate, a diffusion plate and the like are stacked between the assemblies in order, to thereby form an integrating type back light assembly unit. According to this construction, it is possible to carry out the assembling while causing elements to be stacked from a lowermost element to an uppermost element in order, so that the assembling can be easily carried out.

Japanese Patent Application Laid-Open No. Hei. 10-13765 discloses that a back portion of a mounting frame is fixed to a back face of a PDP unit, left and right sides of the mounting frame are bent forward, thereby forming side surface portions, and forward regions of the side surfaces are bent so as to become parallel to a front face of the PDP unit, and are screw-fastened to a front frame. According to this construction, it is possible to distribute loads from the PDP unit onto the entire mounting frame, possible to reduce the number of parts for mounting, and possible to easily carry out assembling and disassembling.

Japanese Patent Application Laid-Open No. Hei. 10-288772 discloses that a liquid crystal holder having a plurality of stopper pawls and an upper portion to which a liquid crystal displayer and a diffusion sheet can be mounted in a superposed state, is employed, and the stopper pawls of the liquid crystal holder are inserted in a plurality of engaging holes formed in a printed circuit board. According to this construction, the liquid crystal displayer is mounted to the printed circuit board without resort to a liquid crystal holder or the like, so that it is possible to easily perform the assembling work and also possible to reduce the number of parts.

Japanese Patent Application Laid-Open No. Hei. 9-127881 discloses that a box-shaped fixing holder which has a filter section, astepportionformedaroundthe filter section, an opening and elastic stopper pawls provided around the opening is made of a transparent resin, the fixing holder is arranged on a printed circuit board so as to cover an LCD and a back light unit, the stopper pawls are engaged with the printed circuit board, and a peripheral portion of the LCD is held down by an inner surface of the step portion and fixed. According to this construction, it is possible to omit a filter for protecting the LCD and a dirt/dust preventing member, and reduce the number of parts and the number of assembling steps, thus saving cost.

In the construction disclosed in the Japanese Patent Application Laid-Open No. 2002-40424, the reflector, a light guide plate, a plurality of diffusion sheets and the like are stacked on a bottom surface of the interior of the mold frame in order, and a liquid crystal assembly and a chassis are then stacked on them. According to the process in which the respective elements are stacked together, it is possible to easilyperform the work and alsopossible to cause the respective elements to flow on the line. However, of the stacked elements, the elements in the interior of the mold frame are covered by fixing frames from the upper both sides and fixed by causing engaging protrusions provided at side portions of the mold frame to be engaged with through-holes formed in side portions of the fixing frames. Such a fixing process can not be applied to a case where a plasma display panel which is large-sized and weighty and a filter are mounted according to the present invention. Of course, screw-fastening can be performed in lieu of the fixing by the engagement between the protrusions and the through-holes. In this case, the screw-fastening is inevitably carried out from a lateral direction. This lowers the work efficiency. Moreover, it is necessary to cause the plasma display panel and the filter to be spaced apart at a fixed distance from each other, so that they can not be directly overlapped each other and it is necessary to inevitably cause spacers to be arranged between the plasma display panel and the filter, thus increasing cost.

The Japanese Patent Application Laid-Open No. 2002-40424 does not disclose a process for fixing the liquid crystal displaypanel assembly and the chassis which are stacked on the fixing frame. Therefore, the problem in which the mounting of the cabinet, the plasma display panel and the filter is involved as discussed above remain unsettled.

In the construction disclosed in the Japanese Patent Application Laid-Open No. Hei. 10-13765, in order to make it possible to distribute the loads from the PDP unit onto the entire mounting frame and also make it possible to reduce the number of parts, the mounting frame is integrated with the back face of the PDP unit by causing the mounting frame to be subjected to a bending process. The purpose of this technique is different from the purpose of the present invention. The problem in which the mounting of the cabinet, the plasma display panel and the filter in the condition where the plasma display panel and the filter are kept spaced apart at the fixed distance from each other is involved as discussed above remain unsettled.

In the construction disclosed in the Japanese Patent Application Laid-Open No. Hei. 10-288772, the small-sized and lightweight liquid crystal displayer and the diffusion sheet are fixed to the printed circuit board by the stopper pawls. Such a technique can not be applied to the case where the large-sized and weighty plasma display panel and the filter are fitted according to the present invention. Moreover, the liquid crystal displayer and the diffusion sheet are merely overlapped directly each other. Therefore, the technique can not be applied to the construction in which the plasma display panel and the filter are required to be spaced apart at the fixed distance from each other as in the present invention.

In the construction disclosed in the Japanese Patent Application Laid-Open No. Hei. 9-127881, the filter itself is formed into a staircase-shape and constitutes the fixing holder. Such a construction can not be applied to the filter of the present invention. Moreover, even if the filter itself is not formed into such a shape but a specialized holder which is formed into the shape is employed, the fixing method by the stopper pawls can not be applied to the case where the large-sized and weighty plasma display panel and the filter are fitted according to the present invention. In addition, the LCD and the back light unit are merely overlapped directly each other in the interior of the fixing holder. Such a construction can not be applied to the case where the plasma display panel and the filter are required to be spaced apart at the fixed distance from each other according to the present invention.

The present invention has been made with a view to overcoming the foregoing problems of the related art constructions and methods.

It is therefore an object of the present invention to provide an inexpensive flat panel display device and method for fitting a resin-molded cabinet, a flat display panel and a filter, in which the resin-molded cabinet, the flat display panel and the filter can be easily fitted in a full-scale production line, without the need of being subjected to fitting in a sub-line step, which facilitate raising of the work efficiency and reducing of the number of assembling steps, in which spacers are not required to be arranged between the plasma display panel and the filter, and which facilitate reducing of the number of screw-fastening steps and reducing of the number of screws to be used.

The above and other objects of the invention are achieved by a flat panel display device according to claim 1 and a method for fitting a cabinet, a flat display panel and a filter according to claim 5. Preferred embodiments are claimed in the dependent claims.

In accordance with one aspect of the present invention, there is provided a flat panel display device having a resin-molded cabinet of a substantially frame shape, a flat display panel, and a filter. The flat panel display device includes a panel holder device, the flat display panel being mounted to the panel holder device, and a filter holder device, the filter being interposedly held between the panel holder device and the filter holder device, and the cabinet having a fitting opening, wherein the panel holder device, the filter, and the filter holder are in order superposed from the above side onto the cabinet located in such a manner that the fitting opening faces upwardly, the panel holder device and the filter holder device are fastened to each other from the above side, to thereby cause the filter to be interposedly held between the panel holder device and the filter holder device and fix the filter, and the flat display panel is superposed from the above side onto the panel holder device and fastened to the panel holder device from the above side.

In the above-mentioned flat panel display device; when the cabinet, the flat display panel and the filter are fitted, the panel holder device, the filter, and the filter holder device are in order superposed from the above side onto the fitting opening of the cabinet arranged with the fittingopening facingupwardly, the panel holder device and the filter holder device are fastened to each other from the above side, to thereby cause the ends of the filter to be interposedly held by the panel holder device and the filter holder device and fixed and, thereafter, the flat display panel is superposed on the panel holder device from the above and fastened to the panel holder device from the above side.

The flat display panel and the filter can be superposed, through the panel holder device and the filter holder device, from the above side onto the cabinet arranged on the full-scale production line with the fitting opening facing upwardly, and the panel holder device and the filter holder device can be screw-fastened to each other from the above side, so that the number of assembling operations conventionally required in a sub-line and the number of screws required for fitting can be reduced and spacers requi red to be arranged between the flat display panel and the filter can be omitted.

In a preferred embodiment of the present invention, the panel holder device includes four panel holder members arranged at upper, lower, left and right ends of a view area of the flat display panel, and the filter holder device including four filter holder members arranged at the upper, lower, left and right ends of the view area of the flat display panel, the panel holder members including rectilinear bodies each having a staircase-shape in cross-section, the rectilinear bodies having step portions for carrying lower surfaces of four ends of the filter, and the filter holder members including rectilinear bodies provided with convex portions which are abutted, through gaskets, against the filter carried on the step portions of the panel holder members, and wherein when the cabinet, the flat display panel and the filter are fitted, the four panel holder members are carried from the above side onto the upper, lower, left and right sides of the view area within the fitting opening of the cabinet located with the fitting opening faces upwardly, in such a manner that the step portions are arranged within the cabinet, the four ends of the filter is carried from the above side onto the step portions of the panel holder members, the four filter holder members are carried on upper surfaces of the four ends of the filter in such a manner that the convexportions thereof are abutted, through the gaskets, against the upper surfaces of the four ends of the filter, the panel holder members and the filter holder members are fastened to one another from the above side, to thereby cause the filter to be interposedly held between the panel holder members and the filter holder members and fixed, and the flat display panel is superposed from the above side onto the panel holder members and fastened to the panel holder members.

In the above-mentioned construction, when the cabinet is assembled to the flat display panel and the filter, the panel holder device, the filter, and the filter holder device are in order superposed from the above side onto the fitting opening of the cabinet arranged with the fitting opening facing upwardly, the panel holder device and the filter holder device are fastened to each other from the above side, to thereby cause the ends of the filter to be interposedly held by the first step portions of the panel holder device and the convex portions of the filter holder device and fixed and, thereafter, the flat display panel is superposed on the panel holder device from the above and fastened to the panel holder device from the above side.

The flat display panel and the filter can be superposed, through the panel holder device and the filter holder device, from the above side onto the cabinet arranged on the full-scale production line with the fitting opening facing upwardly, and the panel holder device and the filter holder device can be screw-fastened to each other from the above side, so that the number of assembling operations conventionally required in a sub-line and the number of screws required for fitting can be reduced and spacers required to be arranged between the flat display panel and the filter can be omitted.

In a preferred embodiment of the present invention, the flat display panel has a size of 37 inch or more, the flat display panel includes brackets provided on a back face thereof, the brackets having screw-insertion holes, the panel holder device includes a pair of first panel holder members arranged at upper and lower ends of the view area of the plasma display panel, the first panel holder members including rectilinear bodies each having a staircase-shape in cross-section, and a pair of second panel holder members arranged at left and right sides of the view area of the plasma display panel, the second panel holder members including rectilinear bodies each having a staircase-shape in cross-section, the rectilinear bodies of the second panel holder members being shorter than the rectilinear bodies of the first panel holder members, the rectilinear bodies of the first panel holder member including first step portions for carrying back surfaces of both end portions of the filter which positionally corresponds to the upper and lower ends of the view area, second step portions arranged above the first step portions and connected to the first step portions so as to form stairs, third step portions arranged above the second portions and connected to the second step portions so as to form stairs, the third step portions each having threaded holes formed in four predetermined portions thereof, fourth step portions arranged above the third step portions, connected to the third step portions and formed so as to have substantially U-shapes in cross-section, the fourth step portions having threaded holes, connecting portions interconnecting the second step portions and the third step portions and having fitting holes, and connecting portions interconnecting the third step portions and the fourth step portions, the rectilinear bodies of the second panel holder members including first step portions for carrying back surfaces of both endportions of the filter whichpositionally corresponds to the left and right side portions of the view area, and second step portions arranged above the first step portions of the secondpanel holdermembers, connected to the first step portions of the second panel holder members so as to form stairs, and have threaded holes formed in three predetermined regions thereof, the filter holder device includes a pair of first filter holder members arranged at regions of the filter which positionally correspond to the upper and lower ends of the view area, the first filter holder members including rectilinear bodies each having a staircase-shape in cross-section, and a pair of second filter holder members arranged at regions of the filter which positionally correspond to the left and right sides of the view area, the second filter holder members including rectilinear bodies each having a staircase-shape in cross-section, the rectilinear bodies of the second filter holder members being shorter than the rectilinear bodies of the first filter holder members, the rectilinear bodies of the first filter holder members including lower step portions having convex portions and base ends, the convex portions being abutted against gaskets and the base ends being carried on the second step portions of the first panel holder members, when the first filterholdermembers are carried, through the gaskets, on the filter carried on the first step portions of the first panel holder members, upper step portions carried on the third step portions of the first panel holder members, the upper step portions being arranged above the lower step portions and connected to the lower step portions so as to form stairs, the upper step portions having screw-insertion holes formed in four predetermined regions thereof, and connecting portions interconnecting the upper step portions and the lower step portions, and having protrusions provided at predetermined regions thereof, the protrusions being fitted in the fitting holes of the first panel holder members and positioned, the rectilinear bodies of the second filter holder members having convex portions, base ends, and screw-insertion holes formed in three predetermined regions thereof for facilitating screw-fastening, the convex portions being abutted against gaskets and the base ends of the second filter holder members being carried on the second step portions of the second panel holdermembers, when the second filterholder members are carried, through the gaskets, on the filter carried on the first step portions of the second panel holder members, wherein when the cabinet, the flat display panel and the filter are fitted, the first panel holder members and the second holder members are carried from the above side onto the upper, lower, left and right sides of the view area within the fitting opening of the cabinet carried on a full-scale line with the fitting opening faces upwardly, in such a manner that the first step portions, the second step portions and the third step portions are arranged within the cabinet, the engaging hole of the first panel holder member is fitted on the convex portion of the cabinet, the filter is carried from the above side onto the step portions of the first panel holder members and the step portions of the second panel holder members, the first filter holder members and the second filter holder members are carried on portions of the filter which are carried on the first step portions in such a manner that the convex portions thereof are abutted, through the gaskets, against the portions of the filter and the first filter holder members and the second filter holder members cooperate with the first panel holder members and the second holder members, respectively, the protrusions of the first filter holder members are fitted into the fitting holes of the first panel holder members, to thereby position the first filter holder members, screws are inserted from the above side into the screw- insertion holes formed in the upper step portions of the first filter holder members and the screw-insertion holes formed in the end portions of the second filter holder members, whereby the end portions of the filter are interposedly held, through the gaskets, between the first step portions of the first and second panel holder members and the convex portions of the first filter holder members and the second filter holder members and are fixed, the flat display panel is carried from the above side onto the fourth step portions of the first panel holder members in such a manner that the brackets of the plasma display panel are abutted against the fourth step portions of the first panel holder members, and the plasma display panel is screw-fastened from the above side to the fourth step portions of the first panel holder members utilizing the screw-insertion holes of the brackets and the threaded holes of the fourth step portions, so that the flat display panel and the filter can be superposed from the above side, through the panel holder device and the filter holder device, onto the cabinet carried on the full-scale production line, and can be screw-fastened to the panel holder device, the filter holder device and the cabinet, the number of assembling operations conventionally required in a sub-line and the number of screws required for fitting can be reduced, and spacers required to be arranged between the plasma display panel and the filter can be omitted.

In the above-mentioned construction, when the cabinet is assembled to the flat display panel and the filter, the panel holder device, the filter, and the filter holder device are in order superposed from the above side onto the fitting opening of the cabinet arranged with the fitting opening facing upwardly, the panel holder device and the filter holder device are fastened to each other from the above side, to thereby cause the ends of the filter to be interposedly held by the first step portions of the panel holder device and the convex portions of the filter holder device and fixed and, thereafter, the flat display panel is superposed on the panel holder device from the above and fastened to the panel holder device from the above side.

The plasma display panel and the filter can be superposed, through the panel holder device and the filter holder device, from the above side onto the cabinet arranged on the full-scale production line with the fitting opening facing upwardly, and the panel holder device and the filter holder device can be screw-fastened to each other from the above side, so that the number of assembling operations conventionally required in a sub-line and the number of screws required for fitting can be reduced and spacers required to be arranged between the flat display panel and the filter can be omitted.

In a preferred embodiment of the present invention, the cabinet has a convex portion provided at a predetermined region thereof which positionally corresponds to the upper end of the view area, a first panel holder member arranged at the upper end of the view area has an engaging hole formed in a predetermined region of a connecting portion interconnecting a third step portion and a fourth step portion thereof, and wherein when the cabinet, the flat display panel, and the filter are fitted, the engaging hole positioned at the above side of the view area in the first panel holder member is fitted over the convex portion of the cabinet, to thereby prevent the cabinet from being completely removed from the first panel holder member at the time of separating operation of the cabinet.

In the above-mentioned construction, the convex portion provided at the cabinet is inserted in the engaged hole formed in the first panel holder member arranged at the upper end of the view area.

According to the embodiment of the present invention, the convex portion provided at the cabinet is inserted in the engaging holes formed in the first panel holder member arranged at the upper end of the view area, so that at the time of separating operation of the cabinet from the panel holdermember, the cabinet can be prevented from coming off from the panel holder member.

In accordance with a further aspect of the present invention, there is provided a method for fitting a cabinet, a flat display panel, and a filter, the cabinet having a fitting opening. The method includes the steps of causing the cabinet to be arranged in such a manner that the fitting opening faces upwardly, causing a panel holder device, the filter, and a filter holder device to be in order superposed onto the cabinet from the above side, causing the panel holder device and the filter holder device to be fastened to each other from the above side, to thereby cause the filter to be interposedly held between the panel holder device and the filter holder device and fixed, thereafter, causing the flat display panel to be superposed onto the panel holder device from the above side, and causing the flat display panel to be fastened to the panel holder device from the above side, and fixed.

These and other objects and many of the attendant advantages of the present invention will be readily appreciated as the same becomes better understood by reference to the following detailed description when considered in connection with the accompanying drawings.

Fig. 1 is a block diagram which is of assistance in explaining a plasma television which is not a part of the invention but helpful for the understanding of the invention.

Fig. 2 is a schematic exploded perspective view which is of assistance in explaining a panel display device according to the embodiment of the present invention;

Figs. 3 and 4 are each a schematic fragmentary sectional view which is of assistance in explaining the panel display device; and

Fig. 5 is a schematic exploded perspective view which is of assistance in explaining a related structure for fitting a plasma display panel.

Embodiments according to the present invention will be discussed hereinafter with reference to the accompanying drawings.

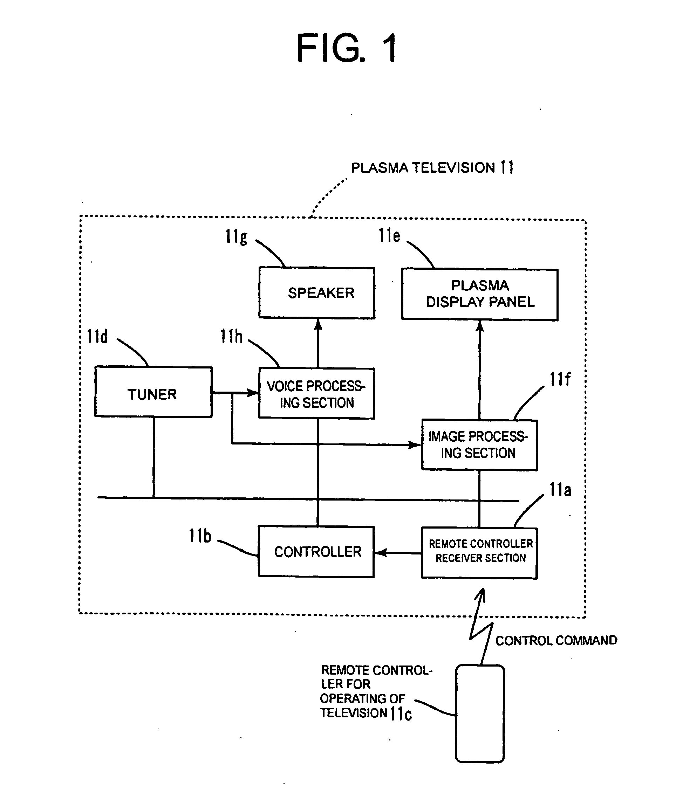

Referring now to Fig. 1, there is illustrated a block diagram which is of assistance in explaining a schematic structure of a plasma television which is not a part of the invention but helpful for the understanding of the invention, employing a plasma display panel which serves as a flat display panel.

The plasma television 11 shown in Fig. 1 includes a body, a controller 11b for controlling the operation of the body, a tuner 11d for extracting a television broadcast signal of a selected channel from television broadcast signals received through an unshown antenna and outputting the television broadcast signal, an image processing section 11f for causing an image based on the television broadcast signal outputted from the tuner 11d to be displayed on a plasma display panel 11e, a voice processing section 11h for causing voice based on the television broadcast signal outputted from the tuner 11d to be outputted from a speaker 11g, and a remote controller receiver section 11a for receiving a control command transmitted from a remote controller 11c.

The controller 11b is designed so as to control turning on/off of a power source, switching of channels, volume up/down, etc., according to the control command received through the remote controller receiver section 11a. Incidentally, an operating power is adapted to be supplied to the respective sections of the plasma television 11 from an unshownpower source circuit. An input of the power source circuit is a commercial power source (for example, AC100V).

In the illustrated example, as the plasma displaypanel 11e, there may be employed, a large-sized, for example, 37 inch or more, general-purpose plasma display panel assembly which is supplied by a panel maker. A filter and a cabinet are fitted to a front side of the plasma display panel 11e in a full-scale production line. Thus, the plasma television 11 is produced.

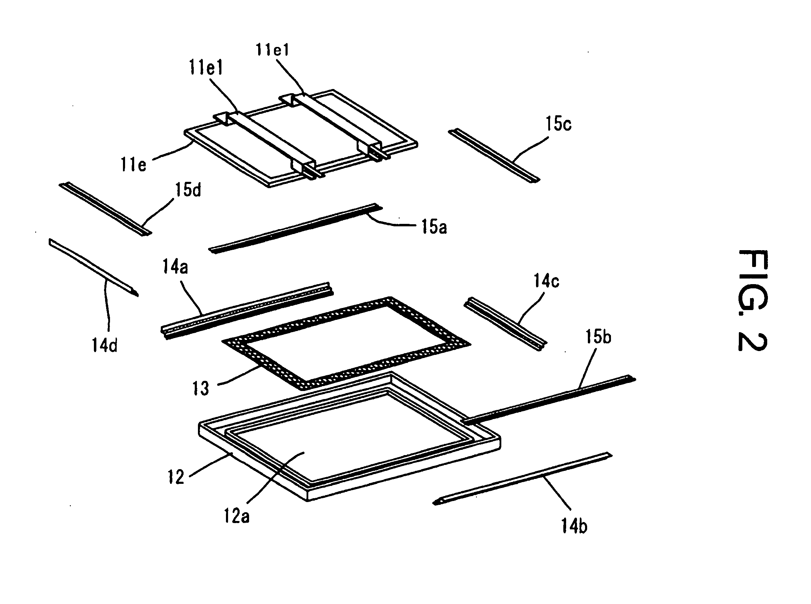

Referring to Fig. 2, there are illustrated the cabinet 12, the plasma display pane 11e, the filter 13 and components of the plasma television 11 for fitting the cabinet 12, the plasma display panel 11e and the filter 13.

In the illustrated example, when the cabinet 12, the plasma display panel 11e and the filter 13 are to be fitted, a panel holder device 14 to which the plasma display panel 11e is to be mounted, and a filter holder device 15 for interposedly holding the filter 13 in cooperation with the panel holder device 14, are used together.

The panel holder device 14 includes four panel holder members. More particularly, the panel holder device 14 includes a pair of first panel holder members 14a, 14b which are to be mounted to an upper end of a view area of the plasma display panel 11e and a lower end of the view area of the plasma display panel 11e, respectively, andapairof secondpanelholdermembers 14c, 14d which are to be mounted to a right end of the view area of the plasma display panel 11e and a left end of the view area of the plasma display panel 11e, respectively. The second panel holder members 14c, 14d are formed so as to be shorter than the first panel holder members 14a, 14b.

The filter holder device 15 includes four filter holder members. More particularly, the filter holder device 15 includes a pair of first filter holder members 15a, 15b for interposedly holding upper and lower ends of the filter 13 therebetween and a pair of second filter holder members 15c, 15d for interposedly holding right and left ends of the filter 13 therebetween.

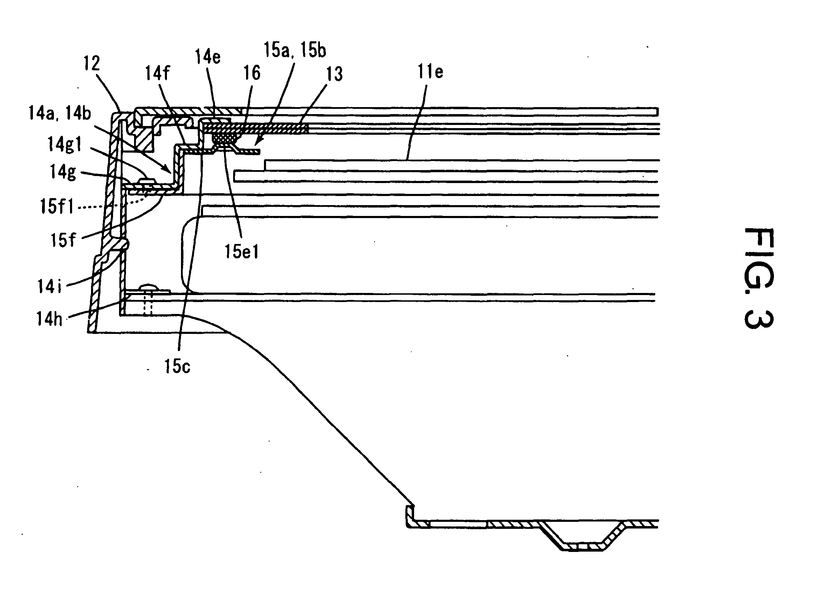

Referring to Fig. 3, each of the first panel holder members 14a, 14b include a longitudinal body which has a staircase-shape in cross-section and includes a first step portion 14e, a second step portion 14f arranged above the first step portion 14e and connected to the first step portion 14e so as to form a stair, a third step portion 14g arranged above the second step portion 14f and connected to the second step portion 14f so as to form a stair, and a fourth step portion 14h arranged above the third step portion 14g, connected to the third step portion 14g and formed so as to have a substantially U-shape in cross section. First step portions 14e serve to carry lower surfaces of upper and lower end portions of a view area of the filter 13 thereon. As will be discussed in greater detail hereinafter, each of the first filter holder members 15a, 15b, has a lower step portion 15e which is provided with a convex portion 15e1, and an upper step portion 15f. Second step portions 14f carry base portions of lower step portions 15e thereon, when convex portions 15e1 of the lower step portions 15e of the first filter holder members 15a, 15b are carried, through gaskets 16, on the upper and lower end portions of the filter 13 carried on the first step portions 14e of the first panel holder members 14a, 14b for assembling. Third step portions 14g each have threaded holes 14g1 formed in four predetermined regions thereof. The third step portions 14g carry upper step portions 15f of the first filter holder members 15a, 15b and are screw-fastened to the upper step portions 15f of the first filter holder members 15a, 15b through the threaded holes 14g1, when the convex portions 15e1 of the lower step portions 15e of the first filter holder members 15a, 15b are carried, through the gaskets 16, on the upper and lower end portions of the filter 13 carried on the first step portions 14e of the first panel holder members 14a, 14b for the assembling.
Brackets 11e1 are provided on a back face of the plasma display panel 11e. Fourth step portions 14h are formed with threaded holes (not shown), carry end portions of the brackets 11e1 thereon and are screw-fastened to the end portions of the brackets 11e1 through the threaded holes of the fourth step portions 14h. The first filter holder members 15a, 15b are provided with protrusions (not shown). Fitting holes (not shown) are formed in predetermined regions of connecting portions interconnecting the second step portions 14 f and the third step portions 14g. The protrusions of the first filter holder members 15a, 15b are fitted in the fitting holes of the connecting portions, whereby the first filter holder members 15a, 15b are positioned. An engaging hole 14i is formed in a predetermined region of a connecting portion interconnecting the third step portion 14g and the fourth step portion 14h of the first panel holder member 14a. The cabinet 12 has a convex portion provided at a predetermined region thereof which positionally corresponds to the upper end portion of a view area of the cabinet 12. The convex portion of the cabinet 12 is fitted in the engaging hole 14.

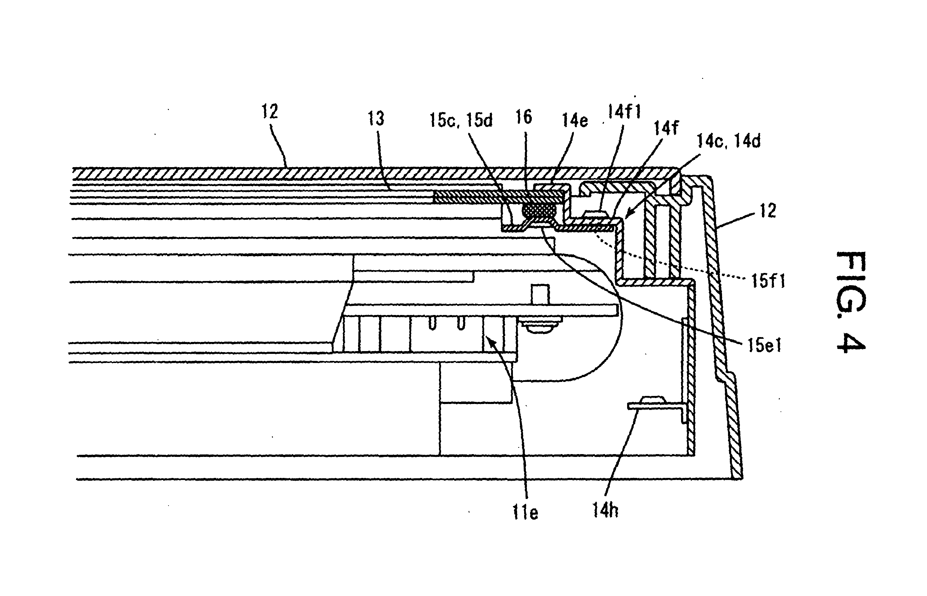

Referring to Fig. 4, each of the second panel holder members 14c, 14d includes a longitudinal body which has a staircase-shape in cross-section and includes a first step portion 14e and a second step portion 14f arranged above the first step portion 14e of a second panel holder member and connected to the first step portion 14e of the second panel holder member so as to form a stair. First step portions 14e of the second panel holder members 14c, 14d serve to carry lower surfaces of left and right end portions of the view area of the filter 13 thereon. As will be discussed in greater detail hereinafter, each of the second filter holder members 15c, 15d is provided with a convex portion 15e1. Second step portions 14f of the second panel holder members 14c, 14d each have threaded holes 14f1 formed in three predetermined regions thereof. The second step portions 14f of the second panel holder members 14c, 14d carry end portions of the second filter holder members 15c, 15d thereon and are screw-fastened to the end portions of the second filter holder members 15c, 15d through the threaded holes 14f1, when convex portions 15el of the second filter holder members 15c, 15d are carried, through gaskets 16, on the left and right end portions of the filter 13 carried on the first step portions 14e of the second panel holder members 14c, 14d for the assembling. Incidentally, there are enough spaces around the second panel holder members 14c, 14d for allowing mounting of the cabinet 12, as compared to the first panel holder members 14a, 14b, so that the second step portions 14f of the second panel holder members 14c, 14d are designed so as to be slightly longer than the second step portions 14f of the first panel holder members 14a, 14b, and can be formed with the threaded holes 14f1.

Again referring to Fig. 3, each of the first filter holder members 15a, 15b includes a longitudinal body which has a stair-shape in cross-section and includes the lower step portion 15e and the upper step portion 15f arranged above the lower step portion 15e and connected to the lower step portion 15e so as to form a stair. When the first filter holder members 15a, 15b are carried, through the gaskets 16, on the filter 13 carried on the first step portions 14e of the first panel holder members 14a, 14b for assembling, the convex portions 15e1 of lower step portions 15e of the first filter holder members 15a, 15b are abutted against the gaskets 16 and the base portions of the lower step portions 15e of the first filter holder members 15a, 15b are carried on the second step portions 14f of the first panel holder members 14a, 14b. Upper step portions 15f of the first filter holder members 15a, 15b each have threaded holes 15f1 formed in four predetermined regions thereof. The upper step portions 15f of the first filter holder members 15a, 15b are carried on the third step portions 14g of the first panel holder members 14a, 14b and screw-fastened to the third step portions 14g of the first panel holder members 14a, 14b through the threaded holes 15f1. Connecting portions which interconnect the lower step portions 15e and the upper step portions 15f have protrusions (not shown) provided at predetermined regions thereof. The protrusions of the connecting portions are fitted in holes (not shown) of the first panel holder members 14a, 14b, whereby the first filter holder members 15a, 15b are positioned.

Again referring to Fig. 4, each of the second filter holder members 15c, 15d includes a longitudinal body which includes a convex portion 15e1, an end portion which is to be carried on the second step portion 14 f of the panel holder member 14c or 14d, and threaded holes 15f1 formed in three predetermined regions of the end portion. When the second filter holder members 15c, 15d are carried, through the gaskets 16, on the filter 13 which is carried on the first step portions 14e of the second panel holder members 14c, 14d for the assembling, convex portions 15e1 of the second filter holder members 15c, 15d are abutted against the gaskets 16 and end portions of the second filter holder members 15c, 15d are carried on the second step portions 14f of the second panel holder members 14c, 14d and screw-fastened to the second step portions 14 f of the second panel holder members 14c, 14d through the threaded holes 15f1.

When combining of the cabinet 12, the plasma display panel 11e, and the filter 13 is to be carried out by using the first panel holder members 14a, 14b, the second panel holder members 14c, 14d, the first filter holder members 15a, 15b and the second filter holder members 15c, 15d which are constructed asdiscussedabove, theyarecarriedonthefull-scaleproduction line.

That is, the cabinet 12 which is formed into a substantially frame-shape is carried on the full-scale production with an fitting opening 12a thereof (Fig. 2) facing upward, and the first panel holder members 14a, 14b and the second panel holder members 14c, 14d are carried on the upper, lower, left and right end portions of the view area of the cabinet 12 within the fitting opening 12a from the above in such a manner that the first step portions 14e, the second step portions 14f and the third step portions 14g are arranged in the cabinet 12. The engaging hole 14i of the first panel holder member 14a arranged on the upper side of the view area is fitted on the convex portion of the cabinet 12.

Then, the filter 13 is carried on the first step portions 14e of the first panel holder members 14a, 14b and second panel holder members 14c, 14d from the above. The first filter holder members 15a, 15b and the second filter holder members 15c, 15d are carried on the filter 13 in such a manner that the convex portions 15e1 of the first and second filter holder members 15a, 15b, 15c, 15d are abutted, through the gaskets 16, against portions of the filter 13 which are carried on the first step portions 14e of the first and second panel holder members 14a, 14b, 14c, 14d, and the first filter holder members 15a, 15b and second filter holder members 15c, 15d positionally correspond to the first panel holder members 14a, 14b and the second panel holder members 14c, 14d. The first filter holder members 15a, 15b are positioned by causing the protrusions of the first filter holder members 15a, 15b to be fitted in the holes of the first panel holdermembers 14a, 14b. Unshown screws are fastened with respect to the screw-insertion holes 15f1 formed in the upper step portions 15f of the first filter holder members 15a, 15b and the screw-insertion holes 15f1 of the end portions of the second filter holder members 15c, 15d from the above. The screws are further fastened with respect to the threaded holes 14g1 formed in the third step portions 14g of the first panel holder members 14a, 14b and the threaded holes 14f1 formed in the second step portions 14f of the second panel holder members 14c, 14d.

Consequently, the end portions of the filter 13 which are interposed between the first and second panel holder members 14a, 14b, 14c, 14d and the first filter holder members 15a, 15b, 15c, 15d are interposedly held, through the gaskets 16, between the first step portions 14e of the first and second panel holder members 14a, 14b, 14c, 14d and the convex portions 15e1 of the first and second filter holder members 15a, 15b, 15c, 15d.

Succeedingly, the plasma display panel 11e is carried on the fourth step portions 14h of the first panel holder members 14a, 14b from the above in such a manner that the brackets 11e1 provided on the back face of the plasma display panel 11e are abutted against the fourth step portions 14h of the first panel holder members 14a, 14b. The plasma display panel 11e is then secured to the respective panel holder members 14a, 14b, 14c, 14d by causing the brackets 11e1 to be screw-fastened to the fourth step portions 14h from the above through the screw-insertion holes formed in the brackets 11e1 and the threaded holes formed in the fourth step portions 14h.

Succeedingly, fixing of the respective panel holder members 14a, 14b, 14c, 14d to the cabinet 12 engaged at the upper end portion of the view area with the convex portion is carried out by causing the first panel holder member 14b to be screw-fastened to an unshown boss provided at a portion of the fitting opening 12a, which positionally corresponds to the lower end portion of the view area within the fitting opening 12a, through an unshown screw-insertion hole of the first panel holder member 14b.

According to the mounting process in which, as discussed above, the combining of the cabinet 12, the plasma display panel 11e, and the filter 13 is carried by using both the panel holder members 14a, 14b, 14c, 14d to which the plasma display panel 11e is to be mounted, and the filter holder members 15a, 15b, 15c, 15d which are to interposedly hold the filter 13 in cooperation with the panel holder members 14a, 14b, 14c, 14d, such a sub-line as required for the mounting of them in the related process is not required, and the plasma display panel 11e and the filter 13 are superposed from the above, through the panel holder members 14a, 14b, 14c, 14d and the filter holder members 15a, 15b, 15c, 15d, on the cabinet 12 carried on the full-scale line, and can be screw-fastened from the above. Accordingly, the number of the mounting steps required in the related sub-line can be considerably reduced.

Moreover, the mounting of the filter 13 to the panel holder members 14a, 14b, 14c, 14d is not carried out directly by using screws but is carried out by causing the filter 13 to be interposedly held between the panel holder members 14a, 14b, 14c, 14d and the filter holder members 15a, 15b, 15c, 15d, so that the number of screws to be used may be a necessary minimum and can be considerably reduced. In addition, the cabinet 12 and the panel holder device 14 are engaged with each other at the upper end portion of the view area, and screw-fastened to each other at the lower portions thereof only, so that the number of screws to be required can be also reduced.

Moreover, the screw-fastening operations can be all carried out from the above side, so that it is possible to considerably improve efficiency of the screw-fastening operations, as compared to the related screw-fastening operations which are necessarily carried out from lateral, forward and rearward sides.

In addition, a distance between the plasma display panel 11e and the filter 13 canbe definedat the mounting position of the panel holder device 14 and the filter holder device 15, such spacers as required in the related art are not required.

Moreover, the mounting of the cabinet 12 and the panel holder device 14 is carried out at the upper end portions thereof by means of the engaging construction as discussed above, so that in a case where the cabinet 12 is required to be separated from the panel holder device 14 at the time of any adjusting work required to be performed at the back of the plasma television 11 and at the time of maintenance work, even if the screw securing the lower end portion of the cabinet 12 is loosened, the upper end portion of the cabinet 12 is engaged with the panel holder device 14, thus preventing the cabinet 12 from being completely removed from the panel holder device 14. In addition, since the separation of the cabinet 12 from the panel holder device 14 can be performed by only loosening the screw securing the lower end portion of the cabinet 12, it is possible to improve efficiency of the work.

Accordingly, it is possible to provide an inexpensive flat panel display device, a fitting method which can be performed at low cost, and a plasma television which employs the inexpensive flat panel display device and produced by the fitting method.

Within the scope of the claims, the following variable modifications are possible.
1. While the case where the plasma display panel is employed as a flat display panel is discussed above, the present invention is not limited to the case and can be applied to other flat display panels, such as a liquid crystal display panel, an organic EL and the like.
2. While the case where the plasma display panel having a panel size of 37 inch or more is employed is discussed above, this is merely an example of the present invention and the panel size is not limited to 37 inch or more. Incidentally, the above-mentioned effects obtained by the present invention are remarkably produced in a case where a display panel which is large-sized and weighty is employed.
3. While the concrete shapes of the panel holder and the filter holder employed in the illustrated example are examples, the present invention is not limited to such shapes. In short, as far as the filter which is carried on the cabinet carried in a standing up state on the line, from the above side, can be interposedly held and fixed by the panel holder and the filter holder, and the flat display panel which is also carried from the above side can be fixed, the shapes of the panel holder and the filter holder may be suitably varied.
4. In the illustrated example, the panel holder members arranged at the upper and lower sides of the view area and the panel holder members arranged at the left and right sides of the view area are different from each other in the shape of the cross-section, and the filter holder members arranged at the upper and lower sides of the view area and the filter holder members arranged at the left and right sides of the view area are also different from each other in the shape of the cross-section. This difference is made by taking it into consideration that the cabinet 12 to which the first panel holder members 14a, 14b are mounted does not structurally have an enough space around the first panel holder members 14a, 14b, the second step portions are inevitably required to be shortened and threaded-holes can not formed in the second step portions, and the third step portions are provided above the second step portions and the threaded-holes are formed in the third step portions. Therefore, unless there is not such a limitation, the upper and lower panel holder members and the left and right panel holder members are not necessarily formed so as to have the cross-section of different shapes each other, and the upper and lower filter holder members and the left and right filter holder members are not necessarily formed so as to have the cross-section of different shapes each other. They may be formed so as to have the same shape in cross-section.
5. While the screw-fastening operations can be all carried out from the above side in the illustrated embodiment, the present invention is not necessarily limited to this. As far as the mounting operations can be carried out on the production line, the screw-fastening operations may be carried out from, for example, the lateral directions. In this case, work efficiency may be slightly lowered as compared to the case where the screw-fastening operations are carried out from the above side but other effects are still obtained.
6. The engaging structure between the upper end portion of the view area of the cabinet and the upper panel holder member may be omitted. Alternatively, a fixing structure by screw-fastening may be employed. In this case, when separating operation of the cabinet is carried out, the effect of preventing of the cabinet from being completely removed from the panel holder device is not obtained, but other effects can be obtained.

## Claims

1. A flat panel display device having a resin-molded cabinet (12) of a substantially frame shape, a flat display panel (11e), and a filter (13), the flat panel display device comprising:
a panel holder device (14);
the flat display panel (11e) being mounted to the panel holder device (14); and
a filter holder device (15);
the filter (13) being interposedly held between the panel holder device (14) and the filter holder device (15); and
the cabinet (12) having a fitting opening (12a),
**characterized in that**
the panel holder device (14), the filter (13), and the filter holder (15) are in order superposed from the above side onto the cabinet (12) located in such a manner that the fitting opening (12a) faces upwardly, the panel holder device (14) and the filter holder device (15) are fastened to each other from the above side, to thereby cause the filter (13) to be interposedly held between the panel holder device (14) and the filter holder device (15) and fix the filter (13), and the flat display panel (11e) is superposed from the above side onto the panel holder device (14) and fastened to the panel holder device (14) from the above side.

2. The flat panel display device according to claim 1, wherein the panel holder device (14) comprises four panel holder members (14a,14b,14c,14d) arranged at upper, lower, left and right ends of a view area of the flat display panel (11e), and the filter holder device (15) comprises four filter holder members (15a, 15b, 15c, 15d) arranged at the upper, lower, left and right ends of the view area of the flat display panel (11e), the panel holder members (14a,14b,14c,14d) comprising rectilinear bodies each having a staircase-shape in cross-section, the rectilinear bodies having step portions (14e,14f,14g,14h) for carrying lower surfaces of four ends of the filter (13), and the filter holder members (15a, 15b, 15c, 15d) comprising rectilinear bodies (15a,15b) provided with convex portions (15e1) which are abutted, through gaskets (16), against the filter (13) carried on the step portions (14e,14f,14g,14h) of the panel holder members (14a, 14b, 14c, 14d), and wherein when the cabinet (12), the flat display panel (11e) and the filter (13) are fitted, the four panel holder members (14a,14b,14c,14d) are carried from the above side onto the upper, lower, left and right sides of the view area within the fitting opening (12a) of the cabinet (12) located with the fitting opening (12a) faces upwardly, in such a manner that the step portions (14e,14f,14g,14h) are arranged within the cabinet (12), the four ends of the filter (13) is carried from the above side onto the step portions (14e,14f,14g,14h) of the panel holder members (14a,14b,14c,14d), the four filter holder members (15a,15b,15c,15d) are carried on upper surfaces of the four ends of the filter (13) in such a manner that the convex portions thereof are abutted, through the gaskets (16), against the upper surfaces of the four ends of the filter (13), the panel holder members (14a,14b,14c,14d) and the filter holder members (15a,15b,15c,15d) are fastened to one another from the above side, to thereby cause the filter (13) to be interposedly held between the panel holder members (14a,14b,14c,14d) and the filter holder members (15a,15b,15c,15d) and fixed, and the flat display panel (11e) is superposed from the above side onto the panel holder members (14a,14b,14c,14d) and fastened to the panel holder members (14a,14b,14c,14d).

3. The flat panel display device according to claim 2, wherein the flat display panel (11e) has a size of 37 inch or more, the flat display panel (11e) includes brackets (11e1) provided on a back face thereof, the brackets (11e1) having screw-insertion holes,
the panel holder device (14) comprises:
a pair of first panel holder members (14a,14b) arranged at upper and lower ends of the view area of the flat display panel (11e);
the first panel holder members (14a,14b) comprising rectilinear bodies each having a staircase-shape in cross-section; and
a pair of second panel holder members (14c,14d) arranged at left and right sides of the view area of the flat display panel (11e);
the second panel holder members (14c,14d) comprising rectilinear bodies each having a staircase-shape in cross-section;
the rectilinear bodies of the second panel holder members (14c,14d) being shorter than the rectilinear bodies of the first panel holder members (14a,14b);
the rectilinear bodies of the first panel holder member (14a,14b) comprising:
first step portions (14e) for carrying back surfaces of both end portions of the filter (13) which positionally corresponds to the upper and lower ends of the view area;
second step portions (14f) arranged above the first step portions (14e) and connected to the first step portions (14e) so as to form stairs;
third step portions (14g) arranged above the second portions and connected to the second step portions (14e,14f,14g,14h) so as to form stairs;
the third step portions (14g) each having threaded holes (14g1) formed in four predetermined portions thereof;
fourth step portions (14h) arranged above the third step portions (14g), connected to the third step portions (14g) and formed so as to have substantially U-shapes in cross-section;
the fourth step portions (14h) having threaded holes;
connecting portions interconnecting the second step portions (14f) and the third step portions (14g) and having fitting holes; and
connecting portions interconnecting the third step portions (14g) and the fourth step portions (14h);
the rectilinear bodies of the second panel holder members (14c,14d) comprising:
first step portions (14e) for carrying back surfaces of both end portions of the filter (13) which positionally corresponds to the left and right side portions of the view area; and
second step portions (14f) arranged above the first step portions of the second panel holder members, connected to the first step portions of the second panel holder members (14c,14d) so as to form stairs, and have threaded holes formed in three predetermined regions thereof;
the filter holder device (15) comprises:
a pair of first filter holder members (15a,15b) arranged at regions of the filter (13) which positionally correspond to the upper and lower ends of the view area;
the first filter holder members (15a,15b) comprising rectilinear bodies each having a staircase-shape in cross-section; and
a pair of second filter holder members (15c,15d) arranged at regions of the filter (13) which positionally correspond to the left and right sides of the view area;
the second filter holder members (15c,15d) comprising rectilinear bodies each having a staircase-shape in cross-section;
the rectilinear bodies of the second filter holder members (15c,15d) being shorter than the rectilinear bodies of the first filter holder members (15a,15b);
the rectilinear bodies of the first filter holder members (15a,15b) comprising:
lower step portions (15e) having convex portions (15e1) and base ends;
the convex portions (15e1) being abutted against gaskets (16) and the base ends being carried on the second step portions (14f) of the first panel holder members (14a,14b), when the first filter holder members (15a,15b) are carried, through the gaskets (16), on the filter (13) carried on the first step portions (14e) of the first panel holder members (14a,14b);
upper step portions (15f) carried on the third step portions (14g) of the first panel holder members (14a,14b);
the upper step portions (15f) being arranged above the lower step portions (15e) and connected to the lower step portions (15e) so as to form stairs;
the upper step portions (15f) having screw-insertion holes (15f1) formed in four predetermined regions thereof; and
connecting portions interconnecting the upper step portions (15f) and the lower step portions (15e), and having protrusions provided at predetermined regions thereof;
the protrusions being fitted in the fitting holes of the first panel holder members (14a,14b) and positioned;
the rectilinear bodies of the second filter holder members (15c,15d) having convex portions (15e1), base ends, and screw-insertion holes formed in three predetermined regions thereof for facilitating screw-fastening;
the convex portions (15e1) being abutted against gaskets (16) and the base ends of the second filter holder members (15c,15d) being carried on the second step portions of the second panel holder members (14c,14d), when the second filter holder members (15c,15d) are carried, through the gaskets (16), on the filter (13) carried on the first step portions of the second panel holder members (14c,14d);
wherein when the cabinet (12), the flat display panel (11e) and the filter (13) are fitted, the first panel holder members (14a,14b) and the second holder members are carried from the above side onto the upper, lower, left and right sides of the view area within the fitting opening of the cabinet (12) carried on a full-scale line with the fitting opening (12a) faces upwardly, in such a manner that the first step portions (14e), the second step portions (14f) and the third step portions (14g) are arranged within the cabinet (12), the engaging hole of the first panel holder member (14a,14b) is fitted on the convex portion of the cabinet (12);
the filter (13) is carried from the above side onto the step portions (14e,14f,14g,14h) of the first panel holder members (14a,14b) and the step portions of the second panel holder members (14a, 14b, 14c, 14d), the first filter holder members (15a,15b) and the second filter holder members (15c,15d) are carried on portions of the filter which are carried on the first step portions (14e) in such a manner that the convex portions (15e1) thereof are abutted, through the gaskets (16), against the portions of the filter (13) and the first filter holder members (15a,15b) and the second filter holder members (15c, 15d) cooperate with the first panel holder members (14a,14b) and the second holder members (14c,14d), respectively, the protrusions of the first filter holder members (15a, 15b) are fitted into the fitting holes of the first panel holder members (14a,14b), to thereby position the first filter holder members (15a, 15b), screws are inserted from the above side into the screw-insertion holes formed in the upper step portions (15f) of the first filter holder members (15a, 15b) and the screw- insertion holes formed in the end portions of the second filter holder members (15c, 15d), whereby the end portions of the filter (13) are interposedly held, through the gaskets (16), between the first step portions (14e) of the first and second panel holder members (14a,14b, 14c,14d) and the convex portions (15e1) of the first filter holder members (15a,15b) and the second filter holder members (15c, 15d) and are fixed;
the flat display panel (11e) is carried from the above side onto the fourth step portions (14h) of the first panel holder members (14a,14b) in such a manner that the brackets (11e1) of the flat display panel (11e) are abutted against the fourth step portions (14h) of the first panel holder members (14a,14b), and the flat display panel (11e) is screw-fastened from the above side to the fourth step portions (14h) of the first panel holder members (14a,14b) utilizing the screw-insertion holes of the brackets (11e1) and the threaded holes of the fourth step portions (14h), so that the flat display panel (11e) and the filter (13) can be superposed from the above side, through the panel holder device (14) and the filter holder device (15), onto the cabinet (12) carried on the full-scale production line, and can be screw-fastened to the panel holder device (14), the filter holder device (15) and the cabinet (12), the number of assembling operations conventionally required in a sub-line and the number of screws required for fitting can be reduced, and spacers required to be arranged between the flat display panel (11e) and the filter (13) can be omitted.

4. The flat panel display device according to claim 3, wherein the cabinet (12) has a convex portion provided at a predetermined region thereof which positionally corresponds to the upper end of the view area, a first panel holder member (14a,14b) arranged at the upper end of the view area has an engaging hole formed in a predetermined region of a connecting portion interconnecting a third step portion (14g) and a fourth step portion (14h) thereof, and wherein when the cabinet (12), the flat display panel (11e), and the filter (13) are fitted, the engaging hole positioned at the above side of the view area in the first panel holder member (14a,14b) is fitted over the convex portion of the cabinet (12), to thereby prevent the cabinet (12) from being completely removed from the first panel holder member (14a,14b) at the time of separating operation of the cabinet (12).

5. A method for fitting a cabinet (12), a flat display panel (11e), and a filter (13), the cabinet (12) having a fitting opening (12a), the method comprising the steps of:
causing the cabinet (12) to be arranged in such a manner that the fitting opening (12a) faces upwardly;
causing a panel holder device (14), the filter (13), and a filter holder device (15) to be in order superposed onto the cabinet (12) from the above side;
causing the panel holder device (14) and the filter holder device (15) to be fastened to each other form the above side, to thereby cause the filter (13) to be interposedly held between the panel holder device (14) and the filter holder device (15) and fixed;
thereafter, causing the flat display panel (11e) to be superposed onto the panel holder device (14) from the above side; and
causing the flat display panel (11e) to be fastened to the panel holder device (14) from the above side, and fixed.

## Patentansprüche

1. Flachbildschirmanzeigevorrichtung mit einem im Wesentlichen Rahmenform aufweisenden Harzgussgehäuse (12), einem Flachanzeigebildschirm (11e) und einem Filter (13), wobei die Flachbildschirmanzeigevorrichtung umfasst:
eine Bildschirmhaltervorrichtung (14);
wobei der Flachanzeigebildschirm (11e) an der Bildschirmhaltervorrichtung (14) montiert ist; und
eine Filterhaltervorrichtung (15);
wobei der Filter (13) zwischen der Bildschirmhaltervorrichtung (14) und der Filterhaltervorrichtung (15) zwischenliegend gehalten ist; und
das Gehäuse (12) eine Einpassöffnung (12a) aufweist,
**dadurch gekennzeichnet, dass**
die Bildschirmhaltervorrichtung (14), der Filter (13) und der Filterhalter (15) in einer Reihenfolge von der oberen Seite her auf dem Gehäuse (12), das derart angeordnet ist, dass die Einpassöffnung (12a) nach oben weist, aufeinandergelegt werden, wobei die Bildschirmhaltervorrichtung (14) und die Filterhaltervorrichtung (15) von der oberen Seite her aneinander befestigt werden, um **dadurch** zu bewirken, dass der Filter (13) zwischen der Bildschirmhaltervorrichtung (14) und der Filterhaltervorrichtung (15) zwischenliegend gehalten ist und der Filter (13) fixiert wird, und der Flachanzeigebildschirm (11 e) von der oberen Seite her auf der Bildschirmhaltervorrichtung (14) aufgelegt wird und an der Bildschirmhaltervorrichtung (14) von der oberen Seite her befestigt wird.

2. Flachbildschirmanzeigevorrichtung nach Anspruch 1, wobei die Bildschirmhaltervorrichtung (14) vier Bildschirmhalterglieder (14a, 14b, 14c, 14d) umfasst, die an oberen, unteren, linken und rechten Enden eines Sichtbereiches des Flachanzeigebildschirmes (11e) angeordnet sind, und die Filterhaltervorrichtung (15) vier Filterhalterglieder (15a, 15b, 15c, 15d) umfasst, die an den oberen, unteren, linken und rechten Enden des Sichtbereiches des Flachanzeigebildschirmes (11e) angeordnet sind, wobei die Bildschirmhalterglieder (14a, 14b, 14c, 14d) jeweils die Querschnittsform einer Stufe aufweisende rechteckige Körper umfassen, die rechteckigen Körper Stufenabschnitte (14e, 14f, 14g, 14h) zum Tragen von unteren Oberflächen von vier Enden des Filters (13) aufweisen, und die Filterhalterglieder (15a, 15b, 15c, 15d) rechteckige Körper (15a, 15b) aufweisen, die mit konvexen Abschnitten (15e1) versehen sind, die über Dichtungen (16) an dem Filter (13) anliegen, der an den Stufenabschnitten (14e, 14f, 14g, 14h) der Bildschirmhalterglieder (14a, 14b, 14c, 14d) getragen wird, und wobei dann, wenn das Gehäuse (12), der Flachanzeigebildschirm (11e) und der Filter (13) eingepasst werden, die vier Bildschirmhalterglieder (14a, 14b, 14c, 14d) von der oberen Seite her auf den oberen, unteren, linken und rechten Seiten des Sichtbereiches innerhalb der Einpassöffnung (12a) des Gehäuses (12), das derart angeordnet ist, dass die Einpassöffnung (12a) nach oben weist, derart getragen werden, dass die Stufenabschnitte (14e, 14f, 14g, 14h) innerhalb des Gehäuses (12) angeordnet sind, die vier Enden der Filter (13) von der oberen Seite her auf den Stufenabschnitten (14e, 14f, 14g, 14h) der Bildschirmhalterglieder (14a, 14b, 14c, 14d) getragen werden, die vier Filterhalterglieder (15a, 15b, 15c, 15d) an oberen Oberflächen der vier Enden des Filters (13) derart getragen werden, dass die konvexen Abschnitte hiervon über die Dichtungen (16) an den oberen Oberflächen der vier Enden des Filters (13) anliegen, die Bildschirmhalterglieder (14a, 14b, 14c, 14d) und die Filterhalterglieder (15a, 15b, 15c, 15d) von der oberen Seite her aneinander befestigt werden, um **dadurch** zu bewirken, dass der Filter (13) zwischen den Bildschirmhaltergliedern (14a, 14b, 14c, 14d) und den Filterhaltergliedern (15a, 15b, 15c, 15d) zwischenliegend gehalten ist und fixiert wird, und der Flachanzeigebildschirm (11e) von der oberen Seite her auf den Bildschirmhaltergliedern (14a, 14b, 14c, 14d) aufgelegt und an den Bildschirmhaltergliedern (14a, 14b, 14c, 14d) befestigt wird.

3. Flachbildschirmanzeigevorrichtung nach Anspruch 2, wobei der Flachanzeigebildschirm (11e) eine Größe von 37 Inch oder mehr aufweist, der Flachanzeigebildschirm (11e) Bügel (11e1) beinhaltet, die an einer rückwärtigen Fläche hiervon vorgesehen sind, wobei die Bügel (11e1) Schraubeneinführlöcher aufweisen,
wobei die Bildschirmhaltervorrichtung (14) umfasst:
ein Paar von ersten Bildschirmhaltergliedern (14a, 14b), die an oberen und unteren Enden des Sichtbereiches des Flachanzeigebildschirmes (11 e) angeordnet sind;
wobei die ersten Bildschirmhalterglieder (14a, 14b) jeweils die Querschnittsform einer Stufe aufweisende rechteckige Körper umfassen; und
ein Paar von zweiten Bildschirmhaltergliedern (14c, 14d), die an linken und rechten Seiten des Sichtbereiches des Flachanzeigebildschirmes (11 e) angeordnet sind;
wobei die zweiten Bildschirmhalterglieder (14c, 14d) jeweils die Querschnittsform einer Stufe aufweisende rechteckige Körper umfassen;
wobei die rechteckigen Körper der zweiten Bildschirmhalterglieder (14c, 14d) kürzer als die rechteckigen Körper der ersten Bildschirmhalterglieder (14a, 14b) sind;
wobei die rechteckigen Körper der ersten Bildschirmhalterglieder (14a, 14b) umfassen:
erste Stufenabschnitte (14e) zum Tragen von rückwärtigen Oberflächen von beiden Endabschnitten des Filters (13), was der Position nach den oberen und unteren Enden des Sichtbereiches entspricht;
zweite Stufenabschnitte (14f), die über den ersten Stufenabschnitten (14e) angeordnet und mit den ersten Stufenabschnitten (14e) derart verbunden sind, dass Stufen gebildet werden;
dritte Stufenabschnitte (14g), die über den zweiten Abschnitten angeordnet und mit den zweiten Stufenabschnitten (14e, 14f, 14g, 14h) derart verbunden sind, dass Stufen gebildet werden;
wobei die dritten Stufenabschnitte (14g) jeweils Gewindelöcher (14g1) aufweisen, die in vier vorbestimmten Abschnitten hiervon ausgebildet sind;
vierte Stufenabschnitte (14h), die über den dritten Stufenabschnitten (14g) angeordnet, mit den dritten Stufenabschnitten (14g) verbunden und derart ausgebildet sind, dass sie im Wesentlichen einen U-förmigen Querschnitt aufweisen;
wobei die vierten Stufenabschnitte (14h) Gewindelöcher aufweisen;
wobei Verbindungsabschnitte die zweiten Stufenabschnitte (14f) und die dritten Stufenabschnitte (14g) wechselseitig verbinden sowie Einpasslöcher aufweisen; und
Verbindungsabschnitte die dritten Stufenabschnitte (14g) und die vierten Stufenabschnitte (14h) wechselseitig verbinden;
wobei die rechteckigen Körper der zweiten Bildschirmhalterglieder (14c, 14d) umfassen:
erste Stufenabschnitte (14e) zum Tragen von rückwärtigen Oberflächen von beiden Endabschnitten des Filters (13), was der Position nach den linken und rechten Seitenabschnitten des Sichtbereiches entspricht; und
zweite Stufenabschnitte (14f), die über den ersten Stufenabschnitten der zweiten Bildschirmhalterglieder angeordnet, mit den ersten Stufenabschnitten der zweiten Bildschirmhalterglieder (14c, 14d) derart verbunden sind, dass Stufen gebildet werden, und Gewindelöcher aufweisen, die in drei vorbestimmten Bereichen hiervon ausgebildet sind;
wobei die Filterhaltervorrichtung (15) umfasst:
ein Paar von ersten Filterhaltergliedern (15a, 15b), die in Bereichen des Filters (13) angeordnet sind, die der Position nach den oberen und unteren Enden des Sichtbereiches entsprechen;
wobei die ersten Filterhalterglieder (15a, 15b) jeweils die Querschnittsform einer Stufe aufweisende rechteckige Körper umfassen; und
ein Paar von zweiten Filterhaltergliedern (15c, 15d), die in Bereichen des Filters (13) angeordnet sind, die der Position nach den linken und rechten Seiten des Sichtbereiches entsprechen;
wobei die zweiten Filterhalterglieder (15c, 15d) jeweils die Querschnittsform einer Stufe aufweisende rechteckige Körper umfassen;
wobei die rechteckigen Körper der zweiten Filterhalterglieder (15c, 15d) kürzer als die rechteckigen Körper der ersten Filterhalterglieder (15a, 15b) sind;
wobei die rechteckigen Körper der ersten Filterhalterglieder (15a, 15b) umfassen:
untere Stufenabschnitte (15e) mit konvexen Abschnitten (15e1) und Basisenden;
wobei die konvexen Abschnitte (15e1) an Dichtungen (16) anliegen und die Basisenden an den zweiten Stufenabschnitten (14f) der ersten Bildschirmhalterglieder (14a, 14b) getragen werden, wenn die ersten Filterhalterglieder (15a, 15b) über die Dichtungen (16) an dem Filter (13) getragen werden, der an den ersten Stufenabschnitten (14e) der ersten Bildschirmhalterglieder (14a, 14b) getragen wird;
obere Stufenabschnitte (15f), die an den dritten Stufenabschnitten (14g) der ersten Bildschirmhalterglieder (14a, 14b) getragen werden;
wobei die oberen Stufenabschnitte (15f) über den unteren Stufenabschnitten (15e) angeordnet und mit den unteren Stufenabschnitten (15e) derart verbunden sind, dass Stufen gebildet werden;
wobei die oberen Stufenabschnitte (15f) Schraubeneinführlöcher (15f1) aufweisen, die in vier vorbestimmten Bereichen hiervon ausgebildet sind; und
Verbindungsabschnitte die oberen Stufenabschnitte (15f) und die unteren Stufenabschnitte (15e) wechselseitig verbinden und Vorsprünge aufweisen, die an vorbestimmten Bereichen hiervon vorgesehen sind;
wobei die Vorsprünge in den Einpasslöchern der ersten Bildschirmhalterglieder (14a, 14b) eingepasst und positioniert werden;
wobei die rechteckigen Körper der zweiten Filterhalterglieder (15c, 15d) konvexe Abschnitte (15e1), Basisenden und Schraubeneinführlöcher aufweisen, die in drei vorbestimmten Bereichen hiervon zum Erleichtern des schraubtechnischen Befestigens ausgebildet sind;
wobei die konvexen Abschnitte (15e1) an Dichtungen (16) anliegen und die Basisenden der zweiten Filterhalterglieder (15c, 15d) an den zweiten Stufenabschnitten der zweiten Bildschirmhalterglieder (14c, 14d) getragen werden, wenn die zweiten Filterhalterglieder (15c, 15d) über die Dichtungen (16) an dem Filter (13) getragen werden, der an den ersten Stufenabschnitten der zweiten Bildschirmhalterglieder (14c, 14d) getragen wird;
wobei dann, wenn das Gehäuse (12), der Flachanzeigebildschirm (11e) und der Filter (13) eingepasst werden, die ersten Bildschirmhalterglieder (14a, 14b) und die zweiten Halterglieder von der oberen Seite her an den oberen, unteren, linken und rechten Seiten des Sichtbereiches innerhalb der Einpassöffnung des Gehäuses (12), das an einer realen Fertigungsstraße mit der nach oben weisenden Einpassöffnung (12a) getragen wird, derart getragen werden, dass die ersten Stufenabschnitte (14e), die zweiten Stufenabschnitte (14f) und die dritten Stufenabschnitte (14g) innerhalb des Gehäuses (12) angeordnet sind, wobei das Eingriffsloch des ersten Bildschirmhaltergliedes (14a, 14b) an den konvexen Abschnitt des Gehäuses (12) eingepasst ist;
wobei der Filter (13) von der oberen Seite her an den Stufenabschnitten (14e, 14f, 14g, 14h) der ersten Bildschirmhalterglieder (14a, 14b) und den Stufenabschnitten der zweiten Bildschirmhalterglieder (14a, 14b, 14c, 14d) getragen wird, die ersten Filterhalterglieder (15a, 15b) und die zweiten Filterhalterglieder (15c, 15d) an Abschnitten des Filters, die an den ersten Stufenabschnitten (14e) getragen werden, derart getragen werden, dass die konvexen Abschnitte (15e1) hiervon über die Dichtungen (16) an den Abschnitten des Filters (13) anliegen, und die ersten Filterhalterglieder (15a, 15b) und die zweiten Filterhalterglieder (15c, 15d) mit den ersten Bildschirmhaltergliedern (14a, 14b) beziehungsweise den zweiten Haltergliedern (14c, 14d) zusammenwirken, die Vorsprünge der ersten Filterhalterglieder (15a, 15b) in den Einpasslöchern der ersten Bildschirmhalterglieder (14a, 14b) eingepasst werden, um **dadurch** die ersten Filterhalterglieder (15a, 15b) zu positionieren, Schrauben von der oberen Seite her in die Schraubeneinführlöcher, die in den oberen Stufenabschnitten (15f) der ersten Filterhalterglieder (15a, 15b) ausgebildet sind, und die Schraubeneinführlöcher, die in den Endabschnitten der zweiten Filterhalterglieder (15c, 15d) ausgebildet sind, eingeführt werden, wodurch die Endabschnitte des Filters (13) über die Dichtungen (16) zwischen den ersten Stufenabschnitten (14e) der ersten und zweiten Filterhalterglieder (14a, 14b, 14c, 14d) und den konvexen Abschnitten (15e1) der ersten Filterhalterglieder (15a, 15b) und der zweiten Filterhalterglieder (15c, 15d) zwischenliegend gehalten sind und fixiert werden;
wobei der Flachanzeigebildschirm (11e) von der oberen Seite her an den vierten Stufenabschnitten (14h) der ersten Bildschirmhalterglieder (14a, 14b) derart getragen wird, dass die Bügel (11e1) des Flachanzeigebildschirmes (11e) an den vierten Stufenabschnitten (14h) der ersten Bildschirmhalterglieder (14a, 14b) anliegen, und der Flachanzeigebildschirm (11e) von der oberen Seite her an den vierten Stufenabschnitten (14h) der ersten Bildschirmhalterglieder (14a, 14b) unter Verwendung der Schraubeneinführlöcher der Bügel (11e1) und der Gewindelöcher der vierten Stufenabschnitte (14h) schraubtechnisch derart befestigt wird, dass der Flachanzeigebildschirm (11e) und der Filter (13) von der oberen Seite her über die Bildschirmhaltervorrichtung (14) und die Filterhaltervorrichtung (15) auf dem Gehäuse (12), das auf einer realen Fertigungsstraße getragen wird, aufgelegt werden kann und an der Bildschirmhaltervorrichtung (14), der Filterhaltervorrichtung (15) und dem Gehäuse (12) schraubtechnisch befestigt werden kann, wobei die Anzahl der Zusammenbauvorgänge, die üblicherweise in einer Nebenfertigungsstraße erforderlich sind, und die Anzahl von Schrauben, die zum Einpassen benötigt werden, verringert werden können und wobei Abstandshalter, deren Anordnung zwischen dem Flachanzeigebildschirm (11e) und dem Filter (13) notwendig wäre, weggelassen werden können.

4. Flachbildschirmanzeigevorrichtung nach Anspruch 3, wobei das Gehäuse (12) einen konvexen Abschnitt aufweist, der an einem vorbestimmten Bereich hiervon vorgesehen ist, der der Position nach dem oberen Ende des Sichtbereiches entspricht, wobei ein erstes Bildschirmhalterglied (14a, 14b), das an dem oberen Ende des Sichtbereiches angeordnet ist, ein Eingriffsloch aufweist, das in einem vorbestimmten Bereich eines Verbindungsabschnittes angeordnet ist, der einen dritten Stufenabschnitt (14g) und einen vierten Stufenabschnitt (14h) hiervon wechselseitig verbindet, und wobei dann, wenn das Gehäuse (12), der Flachanzeigebildschirm (11e) und der Filter (13) eingepasst werden, das Eingriffsloch, das an der oberen Seite des Sichtbereiches in dem ersten Bildschirmhalterglied (14a, 14b) positioniert ist, über den konvexen Abschnitt des Gehäuses (12) eingepasst wird, um hierdurch zu verhindern, dass das Gehäuse (12) während eines Zerlegvorganges des Gehäuses (12) von dem ersten Bildschirmhalterglied (14a, 14b) vollständig entfernt wird.

5. Verfahren zum Einpassen eines Gehäuses (12), eines Flachanzeigebildschirmes (11e) und eines Filters (13), wobei das Gehäuse (12) eine Einpassöffnung (12a) aufweist, wobei das Verfahren die nachfolgenden Schritte umfasst:
Veranlassen, dass das Gehäuse (12) derart angeordnet wird, dass die Einpassöffnung (12a) nach oben weist;
Veranlassen, dass eine Bildschirmhaltervorrichtung (14), der Filter (13) und eine Filterhaltervorrichtung (15) in einer Reihenfolge von der oberen Seite her auf dem Gehäuse (12) aufeinandergelegt werden;
Veranlassen, dass die Bildschirmhaltervorrichtung (14) und die Filterhaltervorrichtung (15) von der oberen Seite her aneinander befestigt werden, um **dadurch** zu bewirken, dass der Filter (13) zwischen der Bildschirmhaltervorrichtung (14) und der Filterhaltervorrichtung (15) zwischenliegend gehalten ist und fixiert wird;
anschließendes Veranlassen, dass der Flachanzeigebildschirm (11e) von der oberen Seite her auf der Bildschirmhaltervorrichtung (14) aufgelegt wird; und
Veranlassen, dass der Flachanzeigebildschirm (11e) an der Bildschirmhaltervorrichtung (14) von der oberen Seite her befestigt und fixiert wird.

## Revendications

1. Dispositif d'affichage à écran plat, comprenant un coffret (12) en résine moulée, d'une forme sensiblement en cadre, un écran d'affichage (11e) plat, et un filtre (13), le dispositif d'affichage à écran d'affichage plat comprenant :
un dispositif support d'écran (14) ;
l'écran d'affichage (11e) étant monté sur le dispositif support d'écran (14) ; et
un dispositif support de filtre (15) ;
le filtre (13) étant maintenu interposé entre le dispositif support d'écran (14) et le dispositif support de filtre (15) ; et
le coffret (12) présentant une ouverture de montage (12a) ;
**caractérisé en ce que**
le dispositif support d'écran (14), le filtre (13), et le dispositif support de filtre (15) sont posés les uns sur les autres, dans l'ordre, en partant depuis le côté supérieur, sur le coffret (12) placé de telle manière que l'ouverture de montage (12a) soit tournée vers le haut, le dispositif support d'écran (14) et le dispositif support de filtre (15) sont fixés à chaque autre depuis le côté supérieur, de manière que le filtre (13) soit maintenu de façon interposée entre le dispositif support d'écran (14) et le dispositif support de filtre (15), et fixent le filtre (13), et l'écran d'affichage (11e) plat est posé, depuis le dessus, sur le dispositif support d'écran (14) et fixé au dispositif support d'écran (14), depuis le côté supérieur.

2. Dispositif d'affichage à écran plat selon la revendication 1, dans lequel le dispositif support d'écran (14) comprend quatre organes support d'écran (14a, 14b, 14c, 14d), agencés aux extrémités supérieure, inférieure, gauche et droite d'une zone de visualisation de l'écran d'affichage (11e) plat, et le dispositif support de filtre (15) comprend quatre organes support de filtre (15a, 15b, 15c, 15d), agencés aux extrémités supérieure, inférieure, gauche et droite de la zone de visualisation de l'écran d'affichage (11e) plat, les organes support de l'écran (14a, 14b, 14c, 14d) comprenant des corps rectilignes, ayant chacun une section transversale en forme d'escalier, les corps rectilignes ayant des parties étagées (14e, 14f, 14g, 14h) pour porter des surfaces inférieures de quatre extrémités du filtre (13), et les organes support de filtre (15a, 15b, 15c, 15d) comprenant des corps rectilignes (15a, 15b) munis de parties convexes (15e1) mises en butée, par l'intermédiaire de joints (16), contre le filtre (13) supporté sur les parties étagées (14e, 14f, 14g, 14h) des organes support d'écran (14a, 14b, 14c, 14d), et dans lequel, lorsque le coffret (12), l'écran d'affichage (11e) plat, et le filtre (13) sont montés, les quatre organes support d'écran (14a, 14b, 14c, 14d) sont supportés, par le côté supérieur, sur les côtés supérieur, inférieur, gauche et droit de la zone de visualisation, à l'intérieur de l'ouverture de montage (12a) du coffret (12) situé avec l'ouverture de montage (12a) tournée vers le haut, de manière que les parties étagées (14e, 14f, 14g, 14h) soient agencées à l'intérieur du coffret (12), les quatre extrémités du filtre (13) sont supportées, depuis le côté supérieur, sur les parties étagées (14e, 14f, 14g, 14h) des organes support d'écran (14a, 14b, 14c, 14d), les quatre organes support de filtre (15a, 15b, 15c, 15d) sont supportés sur des surfaces supérieures des quatre extrémités du filtre du filtre (13), de manière que leurs parties convexes soient mises en butée, par l'intermédiaire des joints (16), contre les surfaces supérieures des quatre extrémités du filtre (13), les organes support d'écran (14a, 14b, 14c, 14d) et les organes support de filtre (15a, 15b, 15c, 15d) sont fixés les uns aux autres depuis le côté supérieur, pour, de cette manière, que le filtre (13) soit maintenu, de façon interposée, entre les organes support d'écran (14a, 14b, 14c, 14d) et les organes support de filtre (15a, 15b, 15c, 15d) et fixé, et l'écran d'affichage (11e) plat est posé, depuis le dessus, sur les organes support d'écran (14a, 14b, 14c, 14d) et fixé aux organes support d'écran (14a, 14b, 14c, 14d).

3. Dispositif d'affichage à écran plat selon la revendication 2, dans lequel l'écran d'affichage (11e) plat présente une taille de 37 pouces ou plus, l'écran d'affichage (11e) plat comprend des consoles (11e1) prévues sur une face arrière de celui-ci, les consoles (11e1) présentant des trous d'insertion de vis,
le dispositif support d'écran (14) comprend :
une paire de premiers organes support d'écran (14a, 14b), agencés aux extrémités supérieure et inférieure de la zone de visualisation de l'écran d'affichage (11e) plat ;
les premiers organes support d'écran (14a, 14b) comprenant des corps linéaires, ayant chacun une section transversale en forme d'escalier ; et
une paire de deuxièmes organes support d'écran (14c, 14d), agencés sur les côtés gauche et droit de la zone de visualisation d'écran d'affichage (11e) plat ;
les deuxièmes organes support d'écran (14c, 14d) comprenant des corps linéaires, ayant chacun une section transversale en forme d'escalier ;
les corps linéaires des deuxièmes organes support d'écran (14c, 14d) étant plus courts que les corps linéaires des premiers organes support d'écran (14a, 14b) ;
les corps linéaires des premiers organes support d'écran (14a, 14b) comprenant :
des premières parties étagées (14e), pour supporter des surfaces arrières des deux parties d'extrémité du filtre (13), ce qui correspond, en terme de position, aux extrémité supérieure et inférieure de la zone de visualisation ;
des deuxièmes parties étagées (14f), agencées au-dessus des premières parties étagées (14e) et reliées aux premières parties étagées (14e), de manière à former des marches d'escalier ;
des troisièmes parties étagées (14g), agencées au-dessus des deuxièmes parties et reliées aux deuxièmes parties étagées (14e, 14f, 14g, 14h), de manière à former des marches d'escalier ;
les troisièmes parties étagées (14g) ayant chacune des trous taraudés (14g1) formés dans quatre parties prédéterminés de celles-ci ;
des quatrièmes parties étagées (14h), agencées au-dessus des troisièmes parties étagées (14g), reliées aux troisièmes parties étagées (14g) et formées pour présenter des formes sensiblement en U en section transversale ;
les quatrièmes parties étagées (14h) ayant des trous taraudés ;
des parties de connexion, interconnectant les deuxièmes parties étagées (14f) et les troisièmes parties étagées (14g) et présentant des trous de montage ; et
des parties de connexion, interconnectant les troisièmes parties étagées (14g) et les quatrièmes parties étagées (14h) ;
les corps rectilignes des deuxièmes organes support d'écran (14c, 14d) comprenant :
des premières parties étagées (14e), pour supporter des surfaces arrières des deux parties d'extrémité du filtre (13), ce qui correspond, en terme de position, aux parties latérales droite et gauche de la zone de visualisation ;
des deuxièmes parties étagées (14f), agencées au-dessus des premières parties étagées des deuxièmes organes support d'écran, reliées aux premières parties étagées des deuxièmes organes support d'écran (14c, 14d), de manière à former des marches d'escalier, et ayant des trous taraudés, formés dans trois régions prédéterminées de celles-ci ;
le dispositif support de filtre (15) comprend :
une paire de premiers organes support de filtre (15a, 15b), agencés en des région du filtre (13) qui, en termes de position, correspondent aux extrémités supérieure et inférieure de la zone de visualisation ;
les premiers organes support de filtre (15a, 15b) comprenant des corps rectilignes ayant chacun une section transversale en forme d'escalier ; et
une paire de deuxièmes organes support de filtre (15c, 15d), agencés en des région du filtre (13) qui, en termes de position, correspondent aux côtés gauche et droit de la zone de visualisation ;
les deuxièmes organes support de filtre (15c, 15d) comprenant des corps rectilignes ayant chacun une section transversale en forme d'escalier ;
les corps linéaires des deuxièmes organes support de filtre (15c, 15d) étant plus courts que les corps linéaires des premiers organes support de filtre (15a, 15b) ;
les corps linéaires des premiers organes support de filtre (15a, 15b) comprenant :
des parties étagées inférieures (15e) ayant des parties convexes (15e1) et des extrémités de base ;
les parties convexes (15e1) étant mises en butée contre des joints (16) et les extrémités de base étant supportés sur les deuxièmes parties d'extrémité (14f) des premiers organes support d'écran (14a, 14b), lorsque les premiers organes support de filtre (15a, 15b) sont supportés, par l'intermédiaire des joints, sur le filtre (13) supporté sur la première partie étagée (14e) des premiers organes support d'écran (14a, 14b) ;
des parties étagées supérieures (15f) portées sur les troisièmes parties étagées (14g) sur les premiers organes support d'écran (14a, 14b), les parties étagées supérieures (15f) étant agencées au-dessus des parties étagées inférieures (15e) et connectées aux parties étagées inférieures (15e) de manière à former des marches d'escalier ;
les parties étagées supérieures (15f) présentant des trous d'insertion de vis (15f1) formés dans quatre régions prédéterminées de celles-ci ; et
des parties de connexion, interconnectant les parties étagées supérieures (15f) et les parties étagées inférieures (15e), et ayant des saillies, prévues dans des régions prédéterminées de celles-ci ;
les saillies étant montées dans les trous de montage des premiers organes support d'écran (14a, 14b) et positionnées ;
les corps linéaires des deuxièmes organes support de filtre (15c, 15d) ayant des parties convexes (15e1), des extrémités de base et des trous d'insertion de vis, formés dans trois régions prédéterminées de ceux-ci, pour faciliter la fixation par des vis ;
les parties convexes (15e1) étant mises en butée contre des joints et les extrémités de base des deuxièmes organes support de filtre (15c, 15d) étant supportées sur les deuxièmes parties étagées des deuxièmes organes support d'écran (14c, 14d), lorsque les deuxièmes organes support de filtre (15c, 15d) sont supportés, par l'intermédiaire des joints (16), sur le filtre supporté sur les premières parties étagées des deuxièmes organes support d'écran (14c, 14d) ;
dans lequel, lorsque le coffret (12), l'écran d'affichage (11e) et le filtre (13) sont montés, les premiers organes support d'écran (14a, 14b) et les deuxièmes organes support d'écran (14c, 14d) sont supportés par le côté de dessus, sur les côtés supérieur, inférieur, gauche et droit de la zone de visualisation, à l'intérieur de l'ouverture de montage du coffret (12), portée, sur une ligne de production en vraie grandeur, avec l'ouverture de montage (12a) tournée vers le haut, de manière que les premières parties étagées (14e), les deuxièmes parties étagées (14f) et les troisièmes parties étagées (14g) soient agencées à l'intérieur du coffret (12), le trou de mise en prise du premier organe support d'écran (14a, 14b) étant ménagé sur la partie convexe du coffret (12) ;
le filtre (13) est porté par le côté de dessus, sur les parties étagées (14e, 14f, 14g, 14h) des premiers organes support d'écran (14a, 14b) et les parties étagées des deuxièmes organes support d'écran (14a, 14b, 14c, 14d), les premiers organes support de filtre (15a, 15b) et les deuxièmes organes support de filtre (15c, 15d) sont supportés sur des parties du filtre qui sont supportées sur les premières parties étagées (14e), de manière que leurs parties convexes (15e1) soient mises en butée, par l'intermédiaire des joints (16), contre les parties du filtre (13) et les premiers organes support de filtre (15a, 15b) et les deuxièmes organes support de filtre (15c, 15d) coopèrent avec les premiers organes support de filtre (14a, 14b) et les deuxièmes organes support de filtre (14c, 14d) respectivement, les saillies des premiers organes support de filtre (15a, 15b) sont montées dans les trous de montage des premiers organes support d'écran (14a, 14b), pour, de cette manière, positionner les premiers organes support de filtre (15a, 15b), des vis sont insérées, depuis le côté de dessus, dans des trous d'insertion de vis formés dans les parties étagées supérieures (15f) des premiers organes support de filtre (15a, 15b), et les trous d'insertion de vis formés dans les parties d'extrémité des deuxièmes organes support de filtre (15c, 15d), de manière que les parties d'extrémité du filtre (13) soient maintenues, de manière interposée, par l'intermédiaire des joints (16), entre les premières parties étagées (14e) des premiers et deuxièmes organes support d'écran (14a, 14b, 14c, 14d), et les parties convexes (15e1) des premiers organes support de filtre (15a, 15b) et des deuxièmes organes support de filtre (15c, 15d) et soient fixées ;
l'écran d'affichage (11e) plat est supporté, par le côté de dessus, sur les quatrièmes parties étagées (14h) des premiers organes support d'écran (14a, 14b), de manière que les consoles (11e1) de l'écran d'affichage (11e) plat soient mises en butée contre les quatrièmes parties étagées (14h) des premiers organes support d'écran (14a, 14b), et l'écran d'affichage (11e) plat est fixé, par des vis, par le côté de dessus, aux quatrièmes parties étagées (14h) des premiers organes support d'écran (14a, 14b), en utilisant les trous d'insertion de vis des consoles (11e1) et les trous taraudés des quatrièmes parties étagées (14h), de manière que l'écran d'affichage (11e) plat et le filtre (13) puissent être posés l'un sur l'autre, depuis le côté de dessus, par l'intermédiaire du dispositif support d'écran (14) et du dispositif support de filtre (15), sur le coffret (12) porté sur la ligne de production en vraie grandeur, et peut être fixé par vis au dispositif support d'écran (14), au dispositif support de filtre (15) et au coffret (12), le nombre d'opérations d'assemblage classiquement nécessaires sous une ligne secondaire et le nombre de vis nécessaires au montage peuvent être réduits, et l'on peut supprimer des organes d'espacement devant être agencés entre l'écran d'affichage (11e) plat et le filtre (13).

4. Dispositif d'affichage à écran plat selon la revendication 3, dans lequel le coffret (12) présente une partie convexe, prévue à une région prédéterminée de celui-ci, qui correspond, en termes de position, à l'extrémité supérieure de la zone de visualisation, un premier organe support d'écran (14a, 14b), agencé à l'extrémité supérieure de la zone de visualisation, présente un trou de mise en prise, formé dans une zone prédéterminée d'une partie de liaison, interconnectant une troisième partie étagée (14g) et une quatrième partie étagée (14h), de celui-ci, et dans lequel, lorsque le coffret (12), l'écran d'affichage (11e) plat et le filtre (13) sont montés, le trou de mise en prise, positionné au côté de dessus de la zone de visualisation dans le premier organe support d'écran (14a, 14b), est monté sur la partie convexe du coffret (12), pour de cette manière empêcher que le coffret (12) ne soit complètement enlevé du premier organe support d'écran (14a, 14b) au moment de l'opération de séparation du coffret (12).

5. Procédé de montage d'un coffret (12), d'un écran d'affichage (11e) plat et d'une filtre (13), le coffret présentant une ouverture de montage (12a),le procédé comprenant les étapes consistant à :
faire que le coffret (12) soit agencé de manière que l'ouverture de montage (12a) soit tournée vers le haut ;
faire qu'un dispositif support d'écran (14), le filtre (13) et un dispositif support de filtre (15) soient, dans l'ordre, posés les uns sur les autres sur le coffret (12), depuis le côté de dessus ;
faire que le dispositif support d'écran (14) et le dispositif support de filtre (15) soient fixés l'un à l'autre depuis le côté de dessus, pour de cette manière faire que le filtre (13) soit maintenu, de façon superposée, entre le dispositif support d'écran (14) et le dispositif support de filtre (15), et fixés ;
ensuite, faire que l'écran d'affichage (11e) plat soit posé sur le dispositif support d'écran (14), par le côté de dessus ; et
faire que l'écran d'affichage (11e) plat soit fixé au dispositif support d'écran (14) depuis le côté de dessus, et fixé.
